# EUROPÄISCHE PATENTSCHRIFT

(11) **EP 0 796 770 B1**
(45) Veröffentlichungstag und Bekanntmachung des Hinweises auf die Patenterteilung: **08.11.2000**
(21) Anmeldenummer: 97104205.6
(22) Anmeldetag: 13.03.1997
(51) Int. Cl.: B60R 21/20

(54) **Fahrzeuglenkrad für die Bestückung mit einem integrierten Gassack-Rückhaltesystem**
Vehicle steering wheel for insertion of an integrated air bag restraint system
Volant de véhicule pour l'implantation d'un système intégré de retenue par coussin gonflable

(30) Priorität: 22.03.1996 DE 29605386 U
(43) Veröffentlichungstag der Anmeldung: 24.09.1997
(73) Patentinhaber: TRW Occupant Restraint Systems GmbH & Co. KG, 73551 Alfdorf (DE)
(72) Erfinder: Heilig, Alexander, 73550 Wissgoldingen (DE)
(74) Vertreter: Degwert, Hartmut, Dipl.-Phys.

(56) Entgegenhaltungen:
- EP-A- 0 461 276
- EP-A- 0 655 370
- DE-A- 4 429 214
- US-A- 5 470 099

## Beschreibung

Die Erfindung betrifft ein Fahrzeuglenkrad für die Bestückung mit einem integrierten Gassack-Rückhaltesystem, mit einem umschäumten Lenkradkörper, dessen Nabenteil eine ausgesparte Rückseite zur Aufnahme eines zusammengefalteten Gassacks samt Druckgasquelle und eine vorderseitige Abdeckung aufweist, die Bestandteil der Umschäumung des Lenkradkörpers ist.

Ein derartiges Fahrzeuglenkrad ist bereits aus der DE 44 23 963 A1 bekannt. Dieses bekannte Fahrzeuglenkrad zeichnet sich durch einen einfachen Aufbau aus, da die vorderseitige Abdeckung für den in das hohle Nabenteil einsetzbaren Gassack-Modul ein fester Bestandteil der Umschäumung des Lenkradkörpers ist. Dadurch entfällt die gesonderte Herstellung und Montage der Abdeckung.

Durch die Erfindung wird ein Fahrzeuglenkrad der oben angegebenen Art zur Verfügung gestellt, dessen Abdeckung für den Gassack-Modul beim Entfalten des Gassacks nicht mehr komplett abreißen kann, sondern sich in besser vorbestimmbarer Weise lediglich öffnet und verformt. Bei dem erfindungsgemäßen Fahrzeuglenkrad weist hierzu die vorderseitige Abdeckung eine einstückig mit dem Nabenteil verbundene, umschäumte Armierung auf. Zusätzliche Verstärkungen sind damit unnötig. Durch diese Ausbildung kann auf einfache und kostengünstige Weise eine Armierung in der Abdeckung vorgesehen werden. Zwar ist auch in dem Fahrzeuglenkrad nach der DE 44 23 963 A1 eine Armierung vorgesehen, diese ist jedoch nicht mit dem Lenkradkörper verbunden, sondern in die Umschäumung eingelegt. Gerade das komplette Umschäumen eines nicht mit anderen Teilen verbundenen Körpers ist jedoch sehr aufwendig, da während des Umschäumungsvorganges einerseits der Körper lagesicher gehalten und andererseits die hierfür notwendige Halterung zur Gewährleistung einer kompletten Umschäumung wieder entfernt werden muß. Das eventuelle Recycling des erfindungsgemäßen Fahrzeuglenkrads ist sehr einfach, da einerseits keine zusätzlichen unterschiedlichen Materialien durch die Armierung in das Fahrzeuglenkrad eingebracht werden und andererseits weniger voneinander zu trennende Teile im erfindungsgemäßen Fahrzeuglenkrad enthalten sind.

Vorzugsweise ist die Armierung zusammen mit dem Lenkradkörper gegossen und weist zumindest einen Schlitz auf, der ein definiertes Aufbiegen der Armierung samt Umschäumung bei sich entfaltendem Gassack bewirkt.

Gemäß einer bevorzugten Ausführungsform hat die Armierung im Querschnitt eine U-Form, wobei der Querholm längsgeschlitzt ist und die Schenkel mit dem Nabenteil verbunden sind. Dadurch ergeben sich zwei klappenartige Teile, die beim Entfalten des Gassacks nach außen gebogen werden und ein Aufreißen der Abdeckung im Bereich des Längsschlitzes ermöglichen.

Gemäß einer weiteren Ausführungsform weist die Armierung zumindest eine Schwächungszone auf, die ein definiertes Aufbiegen der Armierung bei sich entfaltendem Gassack bewirkt. Hierdurch können Biegestellen oder Bruchstellen der Armierung vorbestimmt werden.

Um das Aufreißen der Abdeckung noch besser vorbestimmen zu können, weist die Vorderseite der Armierung gemäß der bevorzugten Ausführungsform erhabene Konturen auf. Diese Konturen können vorstehende Schneidkanten und/oder vorstehende Druckpunkte sein. Die Schneidkanten verlaufen dabei vorzugsweise längs des zumindest einen Schlitzes auf gegenüberliegenden Seiten der Armierung, um beim Entfalten des Gassacks und dem anschließenden Biegen der Armierung ein möglichst gut vorbestimmbares Aufreißen der Abdeckung zu erreichen. Zudem wird die zum Aufreißen der Abdeckung erforderliche Kraft dadurch stark herabgesetzt.

Wenn die Armierung gemäß einer weiteren Ausgestaltung Öffnungen aufweist, verbindet sie sich besser mit der sie umgebenden Umschäumung.

Weitere Merkmale und Vorteile der Erfindung ergeben sich aus der folgenden Beschreibung und aus den Zeichnungen, auf die Bezug genommen wird. In den Zeichnungen zeigen:
Fig. 1 eine perspektivische Ansicht des erfindungsgemäßen noch nicht umschäumten Fahrzeuglenkrads gemäß einer ersten Ausführungsform,
Fig. 2 das teilweise umschäumte Fahrzeuglenkrad nach Figur 2, und
Fig. 3 eine perspektivische Ansicht eines erfindungsgemäßen, noch nicht umschäumten Fahrzeuglenkrads gemäß einer zweiten Ausführungsform.

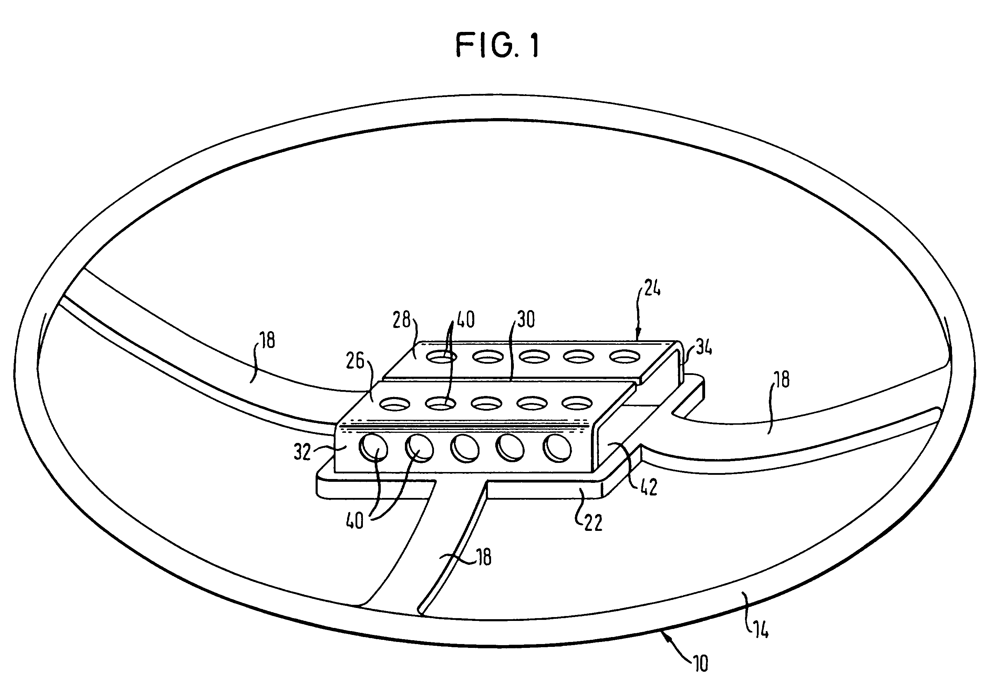

Ein Fahrzeuglenkrad weist einen in Figur 1 gezeigten Lenkradkörper 10 mit einem Lenkradkranz 14 und einem über drei Speichen 18 mit diesem verbundenen zentralen, rechteckigen Nabenteil 22 auf. Der Nabenteil 22 hat eine ausgesparte Rückseite, deren Öffnung von einer ringförmigen Anschlagfläche berandet ist, über die der Nabenteil 22 mit einer nicht gezeigten Lenkwelle verbunden werden kann. An der Vorderseite des Nabenteils 22 ist eine nach oben vorstehende ausgebildete Armierung 24 angegossen. Die Armierung 24 hat im Querschnitt eine U-Form, wobei ein Querholm mit einem durchgehenden, mittigen Schlitz 30 versehen ist, so daß zwei klappenartige Teile gebildet werden, die aus jeweils einem mit dem Nabenteil 22 verbundenen Schenkel 32, 34 und einem sich daran anschließenden, annähernd rechtwinkelig zu dem Schenkel 32, 34 gebogenen Teil 26, 28 des Querholms bestehen. Durch die Armierung 24 ergibt sich eine zur Rückseite des Nabenteils 22 und seitlich teilweise offene Kammer 42, in die ein Gassack-Modul, bestehend aus einem zusammengefalteten Gassack samt Druckgasquelle, einsetzbar ist.

Der Lenkradkörper 10 ist vorzugsweise ein Aluminium- oder Magnesiumdruckgußteil, wobei jedoch auch ein Lenkradkörper 10 aus einem glasfaserverstärkten Kunststoff denkbar ist.

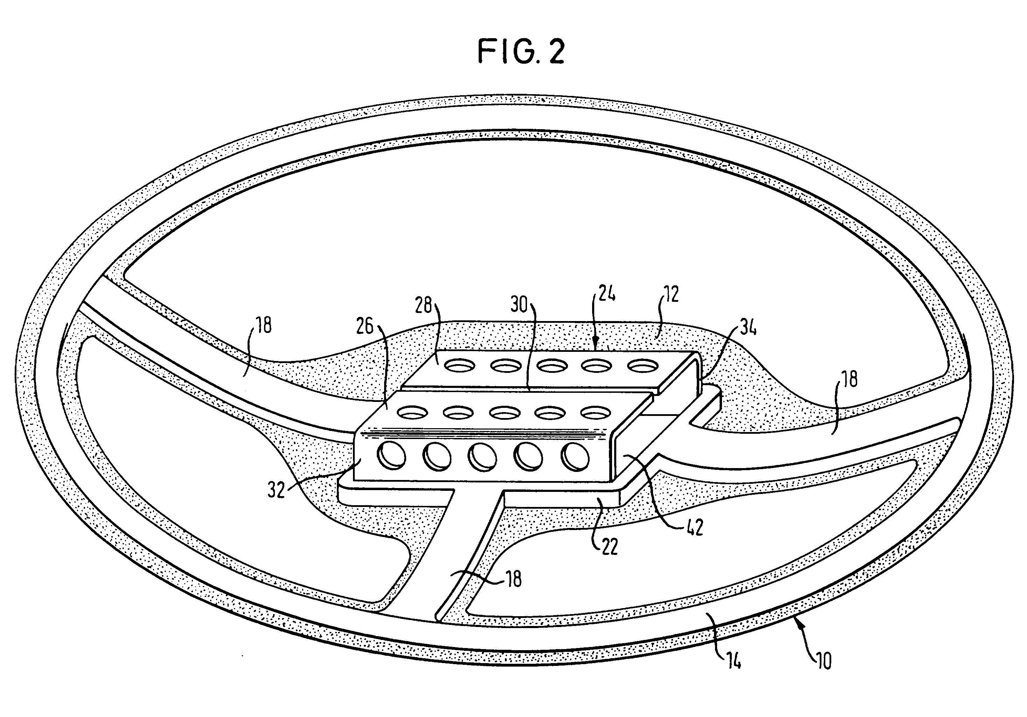

Der in Figur 1 gezeigte Lenkradkörper 10 wird mit einer in Figur 2 angedeuteten Kunststoffumschäumung 12 versehen, wobei in Figur 2 der die Armierung 24 und den Nabenteil 22 vorderseitig umgebende Teil der Umschäumung 12 weggelassen worden ist. Durch Öffnungen 40 in der Armierung 24, die sowohl im Schenkel 32, 34 als auch in den Teilen 26 und 28 des Querholms vorgesehen sind, erstreckt sich die Umschäumung bis ins Innere der Kammer 42, wo es die Armierung 24 und den Nabenteil 22 umgibt. Es ergibt sich damit eine vorderseitige Abdeckung des in das Fahrzeuglenkrad eingesetzten Gassack-Moduls, die aus der durch die Armierung 24 verstärkten Umschäumung besteht.

Beim Entfalten des Gassacks werden die Teile 26, 28 nach außen umgebogen, und die Umschäumung reißt im Bereich des Schlitzes 30 auf, so daß der Gassack sich zum Fahrzeuginsassen hin ausbreiten kann. Zum leichteren Aufbiegen der Armierung 24 kann diese Stellen mit reduziertem Querschnitt aufweisen. Darüber hinaus kann anstatt des Schlitzes 30 auch eine Längsrille vorhanden sein, die einen reduzierten Querschnitt ergibt, um eine Sollbruchstelle festzulegen, was z.B. auch durch eine Perforierung möglich ist.

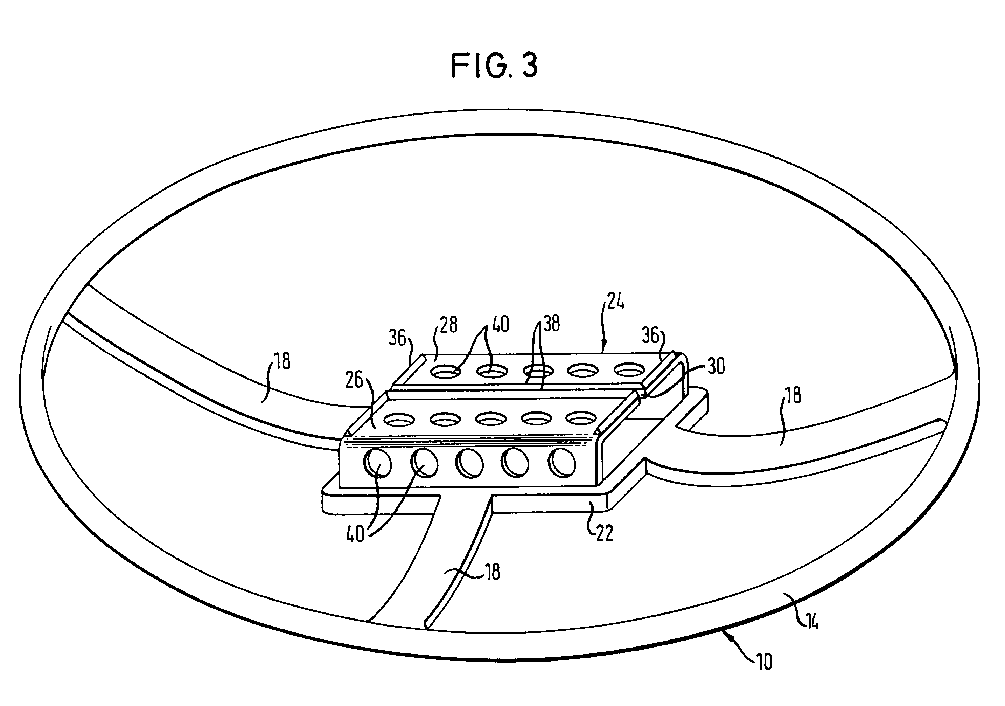

Die in Figur 3 gezeigte zweite Ausführungsform des Fahrzeuglenkrads hat einen Lenkradkörper 10, der im wesentlichen dem in Figur 1 gezeigten entspricht. Lediglich an der Vorderseite der Armierung 24 sind erhabene Konturen zum definierten Aufreißen der Abdeckung in Form von im Querschnitt dreiecksförmigen Schneidkanten 36, 38 vorgesehen. Die Schneidkanten 36, 38 erstrecken sich an der Oberseite der Teile 26, 28 jeweils längs der freien Ränder der Armierung. Insbesondere die Schneidkanten 38, die beidseits und längs des Schlitzes 30 verlaufen, definieren eine wichtige Aufreißlinie, da sie beim Entfalten des Gassacks die Umschäumung aufschneiden. Das Öffnen der Abdeckung wird durch die Schneidkanten 36, 38 besser steuerbar, so daß ein Abreißen der gesamten Abdeckung unmöglich ist. Zudem wird durch die Schneidkanten 36, 38 weniger Kraft zum Aufreißen der Abdeckung benötigt, was ein schnelleres Entfalten des Gassacks zur Folge hat.

Anstatt der Schneidkanten 36, 38 oder zusätzlich zu ihnen können auch erhabene Druckpunkte an den Teilen 26, 28 vorhanden sein, die ein Aufreißen der Abdeckung erleichtern, da dadurch an einer definierten Stelle eine Kraft in die Abdeckung eingeleitet wird.

Obwohl die in den Figuren 1 bis 3 gezeigten Ausführungsformen einen rechteckigen Nabenteil 22 zeigen, an deren Längsseiten die klappenartigen Hälften der Armierung 24 aus den Schenkeln 32, 34 und den Teilen 26, 28 angegossen sind, können auch Nabenteile 22 mit anderen geometrischen Formen vorgesehen sein. Ist der Nabenteil 22 beispielsweise kreisringförmig, kann eine topfartige Armierung vorgesehen sein, welche mehrere Schlitze im Bereich der Stirnwand und der Mantelfläche aufweist, so daß die Abdeckung bei sich entfaltendem Gassack sternförmig aufgerissen wird.

## Patentansprüche

1. Fahrzeuglenkrad für die Bestückung mit einem integrierten Gassack-Rückhaltesystem, mit einem umschäumten Lenkradkörper (10), dessen Nabenteil (22) eine ausgesparte Rückseite zur Aufnahme eines zusammengefalteten Gassacks samt Druckgasquelle und eine vorderseitige Abdeckung aufweist, die Bestandteil der Umschäumung (12) des Lenkradkörpers (10) ist, dadurch gekennzeichnet, daß die vorderseitige Abdeckung eine einstückig mit dem Nabenteil (22) verbundene, umschäumte Armierung (24) aufweist.

2. Fahrzeuglenkrad nach Anspruch 1, dadurch gekennzeichnet, daß die Armierung (24) zusammen mit dem Lenkradkörper (10) gegossen ist.

3. Fahrzeuglenkrad nach Anspruch 1 oder 2, dadurch gekennzeichnet, daß die Armierung (24) zumindest einen Schlitz (30) aufweist, der ein definiertes Aufbiegen der Armierung bei sich entfaltendem Gassack bewirkt.

4. Fahrzeuglenkrad nach einem der vorstehenden Ansprüche, dadurch gekennzeichnet, daß die Armierung (24) im Querschnitt U-förmig ist und einen längsgeschlitzten Querholm sowie mit dem Nabenteil (22) verbundene Schenkel (32, 34) hat.

5. Fahrzeuglenkrad nach einem der Ansprüche 1 bis 3, dadurch gekennzeichnet, daß die Armierung (24) zumindest eine Schwächungszone aufweist, die ein definiertes Aufbiegen der Armierung (24) bei sich entfaltendem Gassack bewirkt.

6. Fahrzeuglenkrad nach einem der vorstehenden Ansprüche, dadurch gekennzeichnet, daß an der Vorderseite der Armierung (24) erhabene Konturen zum definierten Aufreißen der Abdeckung vorgesehen sind.

7. Fahrzeuglenkrad nach Anspruch 6, dadurch gekennzeichnet, daß die Konturen vorstehende Schneidkanten (36, 38) und/oder vorstehende Druckpunkte sind.

8. Fahrzeuglenkrad nach den Ansprüchen 3 und 7, dadurch gekennzeichnet, daß Schneidkanten (38) längs des zumindest einen Schlitzes (30) auf gegenüberliegenden Seiten der Armierung (24) verlaufen.

9. Fahrzeuglenkrad nach Anspruch 7 oder 8, dadurch gekennzeichnet, daß die Schneidkanten (36, 38) an freien Rändern der Armierung (24) vorgesehen sind.

10. Fahrzeuglenkrad nach einem der vorstehenden Ansprüche, dadurch gekennzeichnet, daß die Armierung (24) Öffnungen (40) aufweist.

## Claims

1. A vehicle steering wheel for equipment with an integrated gas bag restraint system, comprising a foam-sheathed steering wheel body (10), the hub part (22) of which has a recessed rear side for receiving a folded gas bag together with a pressurized gas source, and a front cover which is a component of the foamed sheathing (12) of the steering wheel body (10), characterized in that the front cover has a foam-sheathed strengthening structure (24) integrally connected to the hub part (22).

2. The vehicle steering wheel as set forth in claim 1, characterized in that the strengthening structure (24) is cast together with the steering wheel body (10).

3. The vehicle steering wheel as set forth in claim 1 or 2, characterized in that the strengthening structure (24) comprises at least one slot (30) which causes a defined bending open of the strengthening structure on deployment of the gas bag.

4. The vehicle steering wheel as set forth in any of the preceding claims, characterized in that the strengthening structure (24) has a U-shaped cross-section and has a longitudinally slotted cross-beam as well as legs (32, 34) connected to the hub part (22).

5. The vehicle steering wheel as set forth in any of the claims 1 to 3, characterized in that the strengthening structure (24) has at least one weakened zone which causes a defined bending open of the strengthening structure (24) on deployment of the gas bag.

6. The vehicle steering wheel as set forth in any of the preceding claims, characterized in that on the front face of the strengthening structure (24) raised contours are provided for defined tearing open the cover.

7. The vehicle steering wheel as set forth in claim 6, characterized in that the contours are protruding cutting edges (36, 38) and/or protruding pressure points.

8. The vehicle steering wheel as set forth in claims 3 and 7, characterized in that the cutting edges (38) along the at least one slot (30) extend on opposing sides of the strengthening structure (24).

9. The vehicle steering wheel as set forth in claim 7 or 8, characterized in that the cutting edges (36, 38) are provided on free edges of the strengthening structure (24).

10. The vehicle steering wheel as set forth in any of the preceding claims, characterized in that the strengthening structure (24) has openings (40).

## Revendications

1. Volant de direction de véhicule destiné à être garni d'un système de retenue intégré, à sac à gaz, avec un corps de volant de direction (10), entouré de mousse, dont la partie du moyeu (22) présente une face arrière évidée servant à recevoir un sac à gaz replié ainsi que la source de gaz comprimé et un recouvrement situé du côté antérieur, qui fait partie de l'entourage en mousse (12) du corps du volant de direction (10), caractérisé en ce que le recouvrement situé du côté antérieur présente une armature (24) entourée de mousse, qui est reliée d'une seule pièce à la partie du moyeu (22).

2. Volant de direction de véhicule selon la revendication 1, caractérisé en ce que l'armature (24) est coulée en même temps que le corps du volant de direction (10) .

3. Volant de direction de véhicule selon la revendication 1 ou 2, caractérisé en ce que l'armature (24) présente au moins une fente (30), qui provoque une courbure définie de l'armature lorsque le sac à gaz se déplie.

4. Volant de direction de véhicule selon l'une des revendications précédentes, caractérisé en ce que l'armature (24) a en section transversale la forme d'un U et a un longeron transversal fendu dans le sens de la longueur et des branches (32, 34) reliées à la partie du moyeu (22).

5. Volant de direction de véhicule selon l'une des revendications 1 à 3, caractérisé en ce que l'armature (24) présente au moins une zone affaiblie, qui provoque une courbure définie de l'armature (24) lorsque le sac à gaz se déplie.

6. Volant de direction de véhicule selon l'une des revendications précédentes, caractérisé en ce que l'on prévoit sur la face antérieure de l'armature (24) des contours en relief servant à une déchirure définie du recouvrement.

7. Volant de direction de véhicule selon la revendication 6, caractérisé en ce que les contours sont des arêtes coupantes (36, 38) et/ou des points de pression saillants.

8. Volant de direction de véhicule selon les revendications 3 et 7, caractérisé en ce que des arêtes coupantes (38) s'étendent le long d'au moins l'une des fentes (30) sur les côtés opposés de l'armature (24).

9. Volant de direction de véhicule selon les revendications 7 ou 8, caractérisé en ce que les arêtes coupantes (36, 38) sont prévues sur des bords libres de l'armature (24).

10. Volant de direction de véhicule selon l'une des revendications précédentes, caractérisé en ce que l'armature (24) présente des ouvertures (40).
